# EUROPÄISCHE PATENTSCHRIFT

(11) **EP 2 558 710 B1**
(45) Veröffentlichungstag und Bekanntmachung des Hinweises auf die Patenterteilung: **25.09.2013**
(21) Anmeldenummer: 12719580.8
(22) Anmeldetag: 26.04.2012
(51) Int. Cl.: F03B 3/10, F03B 11/00

(54) **PUMPTURBINENANLAGE**
PUMP-TURBINE SYSTEM
ENSEMBLE POMPE-TURBINE

(30) Priorität: 01.07.2011 DE 102011107829
(43) Veröffentlichungstag der Anmeldung: 20.02.2013
(73) Patentinhaber: Voith Patent GmbH, 89522 Heidenheim (DE)
(72) Erfinder: STUMMER, Manfred, 89520 Heidenheim (DE)
(74) Vertreter: Dr. Weitzel & Partner
(86) Internationale Anmeldenummer: PCT/EP2012/001781
(87) Internationale Veröffentlichungsnummer: WO 2013/004321

(56) Entgegenhaltungen:
- DE-A1- 1 807 443
- DE-B3-102005 036 668
- DE-C- 600 273
- US-A- 3 516 757
- US-A- 5 823 740

## Beschreibung

Die Erfindung betrifft eine Pumpturbinenanlage, umfassend eine Turbine mit einem Turbinenlaufrad sowie einem Turbinenspiralgehäuse sowie eine Pumpe mit einem Pumpenlaufrad sowie einem Pumpenspiralgehäuse. Pumpe und Turbine stehen in Triebverbindung mit einer elektrischen Maschine oder sind in eine solche bringbar.

Dabei kommen als Turbinen Francis- oder Pelton-Turbinen in Betracht. Weiterhin kann sowohl die Pumpe als auch die Turbine ein- oder mehrstufig ausgeführt sein, sodass Kombinationen einer einstufigen Turbine mit einer mehrstufigen Pumpe denkbar sind, oder mehrstufige Turbinen mit einer ein- oder mehrstufiger Pumpe.

Pumpturbinenanlagen von Pumpspeicherkraftwerken weisen zwei Betriebsmodi auf, nämlich einen Turbinenbetrieb und einen Pumpbetrieb. Im letzteren pumpt die Pumpe Wasser aus einem Unterbecken in ein Oberbecken und wird dafür durch eine elektrische Maschine, welche in Triebverbindung mit der Pumpe steht, angetrieben. Die elektrische Maschine wird dabei aus einem öffentlichen Stromnetz gespeist, das heißt mit elektrischer Leistung versorgt.

Im Turbinenbetrieb hingegen treibt das Wasser, welches aus dem Oberbecken durch die Turbine in das Unterbecken strömt, die Turbine an, welche eine entsprechende Leistung auf die elektrische Maschine überträgt. Die elektrische Maschine wandelt die Antriebsleistung in elektrische Leistung um und speist diese ins Stromnetz. Somit arbeitet die elektrische Maschine einmal als Generator und einmal als Motor. Sie wird daher auch als Motor-Generator bezeichnet.

Im Gegensatz zu den oben genannten gattungsgemäßen Pumpturbinenanlagen sind auch reversible Pumpturbinenanlagen bekannt geworden, bei welchen die Turbine und Pumpe von einem gemeinsamen Laufrad gebildet wird, sodass im Turbinenbetrieb das gemeinsame Laufrad zur Erzeugung elektrischer Leistung mit Wasser aus dem Oberbecken beaufschlagt und im Pumpbetrieb durch die elektrische Maschine angetrieben wird.

Da derartige Pumpspeicherkraftwerke für den Ausgleich von Lastspitzen im Stromnetz herangezogen werden, muss die Pumpturbine möglichst schnell in die Lage versetzt werden, Turbinenleistung zu liefern, um das Stromnetz zu unterstützen beziehungsweise rasch Pumpleistung aufzunehmen, um für primäre Netzregelung eingesetzt zu werden. Es ist daher wünschenswert, dass die Pumpturbine eines Pumpspeicherkraftwerks aus dem Turbinenbetrieb möglichst schnell in den Pumpbetrieb versetzt werden kann, und umgekehrt.

Bei solchen Anlagen kommt es häufig zu Änderungen des Volumenstromes des der Turbine zugeführten Wassers. Der Volumenstrom kann extreme Werte aufweisen, nach oben oder nach unten. Die Turbine hat einen optimalen Wirkungsgrad, der sich nahe beim Maximum des Volumenstromes ergibt. Bei kleinem Volumenstrom ist der Wirkungsgrad der Turbine relativ klein. Dies gilt besonders für extreme Teillast. Nicht nur der Wirkungsgrad wird bei Teillast schlechter, sondern auch das Kavitationsverhalten wird schlechter.

Beim Umschalten vom Turbinenbetrieb zum Pumpbetrieb und umgekehrt gibt es zwei Extremzustände: Zum einen kann allein die Turbine laufen, und die Pumpe wird mitgenommen. In diesem Falle ist die Turbine wassergefüllt, und die Pumpe luftgefüllt. Hier liegt eine hundertprozentige Turbinenleistung vor.

Im anderen Falle ist nur die Pumpe wassergefüllt, und die Turbine luftgefüllt. Hier liegt eine hundertprozentige Pumpenleistung vor.

Zwischen diesen beiden Extremzuständen gibt es einen Zwischenzustand.

In allen diesen Fällen spielt das Abdichten der Spalte zwischen dem Laufrad und dem Gehäuse der betreffenden hydraulischen Maschine eine wichtige Rolle.

Die DE 1 807 443 beschreibt ein Verfahren und eine Einrichtung zum Betrieb einer Pumpturbinenanlage, die vorübergehend ohne Arbeitsmedium, also Wasser, gefahren wird. Zum Abdichten des Leckagestroms zwischen dem Laufrad und dem Saugrohr der Pumpe und Turbine werden gestufte Labyrinthe vorgeschlagen, wohingegen zur Abdichtung zwischen dem Laufrad und dem übrigen Gehäuse jeweils glatte Labyrinthe verwendet werden. Um die Verlustleistung der Pumpturbinenanlage zu reduzieren, werden beim ausschließlichen Betrieb der Pumpe die Spaltweiten der Labyrinthdichtungen der Pumpe minimiert, während die der Turbine maximiert werden. Das Laufrad der Turbine läuft sodann in Luft um. Im Turbinenbetrieb werden umgekehrt die Spaltweiten der Labyrinthdichtungen der Turbine minimiert, die der Pumpe maximiert, wobei dann auch das Pumpenlaufrad in Luft umläuft. Beim Übergang vom Pump- zum Turbinenbetrieb oder umgekehrt wird hierzu die gesamte Turbinenwelle mit dem Pumpen- und Turbinenlaufrad in Axialrichtung verschoben.

Der Erfindung liegt die Aufgabe zugrunde, eine Pumpturbinenanlage derart zu gestalten, dass die mit Teillast verbundenen Probleme vermieden werden. Es soll somit der Wirkungsgrad eines Maschinensatzes, umfassend wenigstens eine Turbine und wenigstens eine Pumpe, über einen größeren Betriebsbereich optimal sein, gegenüber bekannten Maschinensätzen. Somit soll auch bei extremer Teillast der Wirkungsgrad noch annehmbar sein. Das Kavitationsverhalten soll verbessert werden. Gleichzeitig sollen die mit dem Umschalten verbundenen Probleme vermieden werden. Es sollen nämlich die Verlustleistung reduziert und die Kühlung der beteiligten Dichtungen optimiert werden.

Diese Aufgabe wird durch die Merkmale von Anspruch 1 gelöst.

Ein wesentlicher Gedanke der Erfindung besteht darin, die ausgelegte Leistung der Turbine größer zu bemessen, als die ausgelegte Leistung der Pumpe. Außerdem soll zwischen Turbine und Pumpe ein hydraulischer Kurzschluss herstellbar sein.

Dies hat den Vorteil, dass die Turbine auch bei einem geringen Volumenstrom des zugeführten Wassers in einem optimalen Bereich gefahren werden kann. Sie gibt zwar geringe Leistung ab, aber bei einem wesentlich besseren Wirkungsgrad, als dies bei bekannten Anlagen der Fall war.

Auch sind für die genannte Erweiterung des Betriebsbereiches keine zusätzlichen Einrichtungen oder Maßnahmen notwendig, wie zum Beispiel das Stabilisieren des Laufes durch Zuführen von Stabilisierungsluft. Gleichwohl können solche zusätzlichen Maßnahmen angewandt werden.

Der Unterschied der ausgelegten Leistungen von Turbinen und Pumpe wird am besten derart gewählt, dass der Wirkungsgrad der Turbine bei einer bestimmten Teillast und der Wirkungsgrad des hydraulischen Kurzschlusses optimal sind.

Die Turbine kann eine ausgelegte Leistung aufweisen, die beim 1- bis 2-fachen der ausgelegten Leistung der Pumpe liegt, beispielsweise beim 1,1-flachen, 1,2-fachen, 1,3-fachen und so weiter bis zum 2-fachen.

Es ist zweckmäßig; beide hydraulische Maschinen, somit Turbine und Pumpe, jeweils mit einem regelbaren Leitrad auszustatten. Dies ermöglicht ein geregeltes Umschalten vom hydraulischen Kurzschlussbetrieb im Turbinenbetrieb, und umgekehrt.

Dem Turbinenlaufrad oder dem Pumpenlaufrad oder diesen beiden kann jeweils ein Absperrorgan vorgeschaltet sein (sogenanntes Ringgate oder Zylinderschütze). Das Absperrorgan kann sich zwischen Laufrad und Traversenring oder zwischen Laufrad und Leitapparat befinden. Am besten wird es dem Laufrad unmittelbar vorgeschaltet.

Auch kann dem Turbinenlaufrad oder dem Pumpenlaufrad ein Absperrorgan nachgeschaltet werden, am besten eine Drosselklappe, und zwar vor oder hinter dem Saugrohr, im Extremfall auch innerhalb des Saugrohres.

Ein weiterer wesentlicher Gedanke der Erfindung besteht darin, dass das stationäre Bauteil zur Einstellung der Spaltweite der ringspaltförmigen Kanäle in Axialrichtung relativ zum umlaufenden Bauteil zwischen einer Betriebsstellung und einer Nicht-Betriebsstellung in Richtung eines Leckagestromes verschiebbar gelagert ist. In anderen Worten wird das stationäre Bauteil parallel zur Drehachse der hydraulischen Maschine relativ zum umlaufenden Bauteil verschoben.

Wenn nachfolgend lediglich von hydraulischer Maschine die Rede ist, so ist stets auch die erfindungsgemäße Wasserturbine oder Pumpturbine gemeint.

Als Betriebsstellung ist im Sinne der vorliegenden Erfindung die Stellung des stationären zum umlaufenden Bauteil gemeint, in welcher in der Labyrinthdichtung ein Leckagestrom zum Abdichten und Kühlen strömt. Dies ist im Betrieb der hydraulischen Maschine dann der Fall, wenn das Arbeitsmedium auf deren Laufschaufeln auftrifft. Als Nicht-Betriebsstellung ist jene Stellung gemeint, in der die Labyrinthdichtung nicht gegen den Austritt von Arbeitsmedium dichtet. Dies ist beispielsweise dann der Fall, wenn das Arbeitsmedium der hydraulischen Maschine entleert oder ausgeblasen wird und deren Laufrad somit in einem anderen Medium als das Arbeitsmedium, insbesondere Luft, umläuft.

Mit Spaltweite ist vorliegend der (kleinste auftretende) Abstand beider, einander in der Betriebsstellung gegenüberliegender Begrenzungsflächen der Labyrinthdichtung, insbesondere der ringspaltförmigen Kanäle, gemeint. In anderen Worten ist dies der Abstand zwischen den einander zugewandten Begrenzungsflächen, der in einem Axialschnitt durch die Drehachse der hydraulischen Maschine senkrecht zur Drehachse in Axialrichtung gemessen werden kann (Radialspalt). Im Gegensatz dazu wird mit Spaltlänge, ebenfalls in demselben Axialschnitt gesehen, die axiale Erstreckung der Teile der einander gegenüberliegenden ringspaltförmigen Kanäle (parallel zur Drehachse der hydraulischen Maschine) verstanden.

Die Erfindung ist anhand der Zeichnung näher erläutert. Darin ist im Einzelnen folgendes dargestellt:
- Figur 1: zeigt zwei in Francis-Bauart ausgeführte hydraulische Maschinen, die eine als Turbine und die andere als Pumpe, in einem Axialschnitt.
- Figur 2: zeigt in schematischer Darstellung eine Pumpturbinenanlage gemäß einer ersten Ausführungsform mit einer in Vertikalrichtung verlaufenden Welle.
- Figur 3: zeigt in schematischer Darstellung eine weitere Ausführungsform der Pumpturbinenanlage mit einer in Horizontalrichtung angeordneten Welle.
- Figur 4: zeigt in schematischer Darstellung eine dritte Ausführungsform, bei der sich eine elektrische Maschine zwischen den beiden Spiralgehäusen befindet.
- Figuren 5a und 5b: zeigen unterschiedliche Ausführungsformen der Labyrinthdichtung in einer Betriebsstellung und einer Nicht-Betriebsstellung des stationären Bauteils.

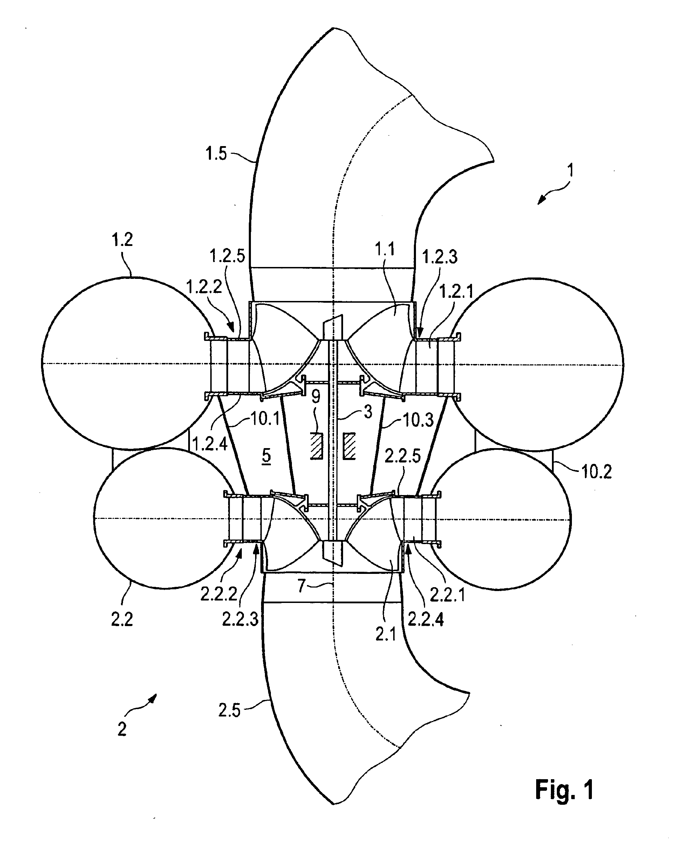

Die in Figur 1 gezeigte Pumpturbinenanlage ist wie folgt aufgebaut: Die Turbine 1 umfasst ein Turbinenlaufrad 1.1, umfassend eine Mehrzahl von Laufschaufeln. Das Turbinenlaufrad 1.1 ist drehfest mit einer Welle 3 ausgeführt, und dessen Drehachse 7 ist drehbar gelagert. Das Turbinenlaufrad 1.1 ist von einem Turbinenspiralgehäuse 1.2 umgeben. Außerdem ist dem Turbinenlaufrad 1.1 ein Kranz von Leitschaufeln vorgeschaltet.

Die Turbine 1 weist ein Turbinensaugrohr 1.5 auf. Dieses ist den Laufschaufeln nachgeschaltet und umfasst einen Eintrittsdiffusor mit einem sich hieran anschließenden Krümmer und einer sich wiederum hieran anschließenden Rohrleitung, der Strömungsquerschnitt sich in Strömungsrichtung des Wassers erweitern kann.

Vorliegend ist der Turbine 1 eine Pumpe 2 unmittelbar zugewandt. Letzteres bedeutet, dass beide hydraulische Maschinen axial benachbart angeordnet sind und sich zwischen ihnen kein Motor-Generator befindet. Die Pumpe 2 ist hier unterhalb der Turbine 1 angeordnet. Die Anordnung kann auch umgekehrt sein, Pumpe oben und Turbine unten.

Die Pumpe 2 umfasst einen ähnlichen Aufbau wie die Turbine 1: Das Pumpenlaufrad 2.1 ist ebenfalls drehfest mit der Welle 3 ausgeführt und umfasst eine Mehrzahl von Laufschaufeln. Die Pumpe 2 umfasst ein separates, von dem Turbinenspiralgehäuse 1.2 hydraulisch getrenntes Pumpenspiralgehäuse 2.2, welches das Pumpenlaufrad 2.1 umgibt. Auch dem Pumpenlaufrad ist vorzugsweise ein Kranz von Leitschaufeln 2.2.1 vorgeschaltet.

Auch die Pumpe 2 weist ein Pumpensaugrohr 2.5 auf, welches wie das der Turbine 1 ausgeführt sein kann.

Die Turbine 1 ist derart ausgelegt, dass ihre Nennleistung N_{T} größer ist, als die Nennleistung Np der Pumpe 2. Im vorliegenden Falle liegt der Unterschied bei 2,5. Das heißt, dass die Nennleistung der Turbine das 2,5-fache jener der Pumpe beträgt. Auch noch größere Unterschiede sind denkbar, beispielsweise 3 oder 4. Es kommt praktisch jeder Wert zwischen 1 und ... 4 oder 5 in Betracht.

Konstruktiv werden die Unterschiede der Nennleistungen durch die Dimensionierung von Pumpe und Turbine herbeigeführt, und zwar bezüglich der Abmessungen und der gewählten Festigkeitswerte. Die Figuren stellen die Verhältnisse nur schematisch dar, ohne dass die Nennleistungs-Unterschiede zum Ausdruck kommen.

Im vorliegenden Fall liegen die beiden Spiralgehäuse 1.2 und 2.2 direkt in einem gegenseitigen Abstand übereinander. Der von ihnen gebildete Zwischenraum 5 ist vorliegend frei von einer elektrischen Maschine. Der Zwischenraum 5 wird vorliegend von den einander zugewandten Spiralgehäusen 1.2 und 2.2 begrenzt. Beide Spiralgehäuse 1.2 und 2.2 können über ein Stützelement gegeneinander abgestützt sein.

Das Stützelement kann von unterschiedlicher Gestalt sein. Im vorliegenden Falle ist es als Kegelmantel 10.1 ausgeführt. Der Kegelmantel stützt sich einerseits gegen den Traversenring 1.2.2 der Turbine, und andererseits gegen den Traversenring 2.2.2 der Pumpe. Eine weitere Abstützung 10.2, ebenfalls in Ringform, befindet sich zwischen den Spiralgehäusen 1.2 und 2.2. Auch wären Abstützungen denkbar zwischen dem Spiralgehäuse der einen Maschine, und dem Traversenring der anderen Maschine.

Dem Turbinenlaufrad 1.1 ist ein Absperrorgan 1.2.3 vorgeschaltet, und dem Pumpenlaufrad 2.1 ein Absperrorgan 2.2.3 nachgeschaltet - jeweils sogenanntes "Ringgate" oder "Zylinderschütze". Die Zylinderschütze ist somit bei beiden hydraulischen Maschinen zwischen Laufrad und Leitrad angeordnet.

Eine weitere Abstützung 10.3 in Gestalt eines Zylinders befindet sich zwischen dem Turbinendeckel und dem Pumpendeckel. Die Abstützung 10.3 hat den Vorteil, dass sie einen Kraftausgleich zwischen den beiden Maschinen herbeiführt. Auch eine Abstützung zwischen dem Traversenring der einen Maschine und dem Deckel der anderen Maschine kommt in Betracht.

Wie man sieht, ist die Welle 3 in einem Lager 9 gelagert. Das Lager 9 kann in eine der Abstützungen 10.1 beziehungsweise 10.3 integriert sein.

Die folgenden Bauteile können eine einzige Baueinheit bilden: das Turbinenspiralgehäuse 1.2, das Pumpenspiralgehäuse 2.2, die Stützelemente 10.1, 10.2, 10.3, gegebenenfalls noch die Traversenringe 1.2.2 und 2.2.2 sowie das Lager 9. Die genannten Stützelemente 10.1, 10.2, 10.3 können alle drei vorhanden sein, oder nur eines der Stützelemente, oder zwei der Stützelemente.

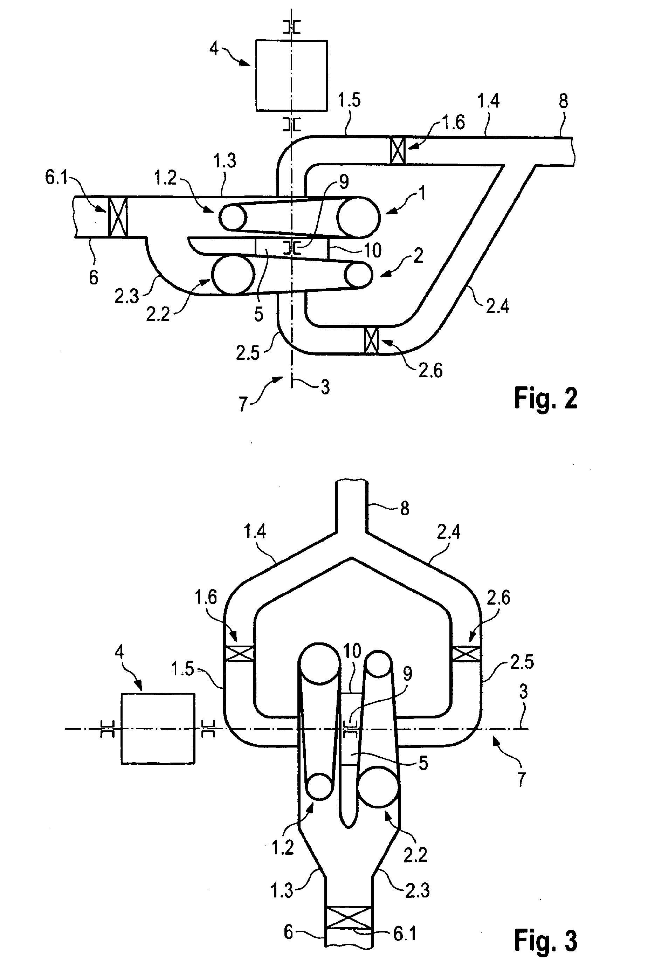

Figur 2 zeigt eine erste Ausführungsform der erfindungsgemäßen Pumpenturbinenanlage. Wie man sieht, schließt sich an das Turbinenspiralgehäuse 1.2 eine Druckleitung 1.3 sowie an das Pumpenspiralgehäuse 2.2 eine Druckleitung 2.3 an. Beide Druckleitungen 1.3, 2.3 münden in einer gemeinsamen Druckleitung 6, in welcher sich ein gemeinsames Absperrorgan 6.1 befindet.

Das gemeinsame Absperrorgan 6.1 in der Druckleitung 6 bleibt vorzugsweise stets offen und wird nur im Notschlussfall oder zu Wartungszwecken geschlossen. Dies bringt den Vorteil mit sich, dass die beiden Spiralgehäuse 1.1 und 2.2 stets mit demselben Druck, nämlich dem am Oberwasser anstehenden Oberwasserdruck beaufschlagt sind und somit keinen frequenten Lastwechseln ausgesetzt sind.

An beide Saugrohre 1.5 und 2.5 schließen sich jeweils entsprechende Saugleitungen 1.4 und 2.4 an. In beiden Saugleitungen 1.4 und 2.4 ist jeweils ein separates Absperrorgan 1.6 und 2.6 angeordnet. Beide Saugleitungen 1.4 und 2.4 münden in einer gemeinsamen Saugleitung 8.

In Triebverbindung mit der Welle 3 steht vorliegend eine elektrische Maschine 4, welche als Motor-Generator ausgeführt ist. Letztere ist oberhalb der Turbine 1 und somit außerhalb des Zwischenraums 5 axial benachbart zur Turbine 1angeordnet. Hierdurch ist es möglich im Zwischenraum 5, welcher von den beiden Spiralgehäusen 1.2 und 2.2 sowie von dem Stützelement 10 begrenzt wird ein Lager 9 einzubringen, welches beispielsweise als Führungslager oder kombiniertes Spur- und Führungslager zur Abstützung der Welle 3 dient. Dadurch wird die Laufruhe der Welle 3 nochmals verbessert.

Figur 3 zeigt eine weitere Ausführungsform der erfindungsgemäßen Pumpturbinenanlage in Anlehnung an Figur 2, deren Anordnung lediglich um 90 Grad nach links gedreht worden ist, sodass die Drehachse 3 in horizontaler Richtung verläuft und die elektrische Maschine 4 seitlich neben den beiden hydraulischen Maschinen 1 und 2 angeordnet ist. Dabei sind im Wesentlichen dieselben Bauelemente mit den gleichen Bezugszeichen, wie in Figur 2 bezeichnet, dargestellt.

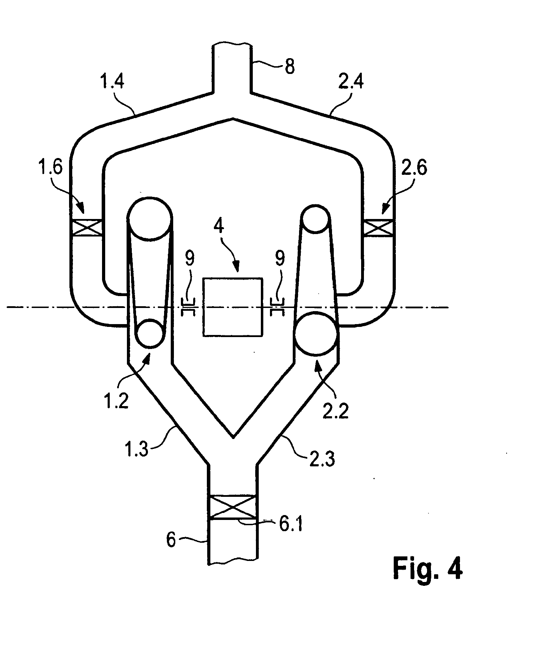

Figur 4 zeigt eine weitere Ausführungsform, bei welcher die elektrische Maschine 4 zwischen den beiden Spiralgehäusen 1.2 und 2.2 angeordnet ist, und zwar proaxial zu diesen. Die Anordnung der beiden Spiralgehäuse 1.2 und 2.2 sowie der elektrischen Maschine 4 kann eine streng symmetrische sein.

Bevorzugt könnten unabhängig von der Lage der Welle 3 beide Spiralgehäuse 1.2 und 2.2 komplett einbetoniert aber auch freistehend angeordnet sein. Der Zwischenraum 5 kann so groß ausgebildet sein, dass eine Revisionsöffnung zur Wartung beziehungsweise Monate und De-Montage beider hydraulischer Maschinen problemlos erreichbar ist.

Die Erfindung lässt sich unter anderem bei den folgenden Bauarten von Anlagen verwenden:
- Einstufige Turbine mit einstufiger Pumpe.
- Einstufige Turbine mit mehrstufiger Pumpe.
- Mehrstufige Turbine mit einstufiger Pumpe.
- Mehrstufige Turbine mit mehrstufiger Pumpe.

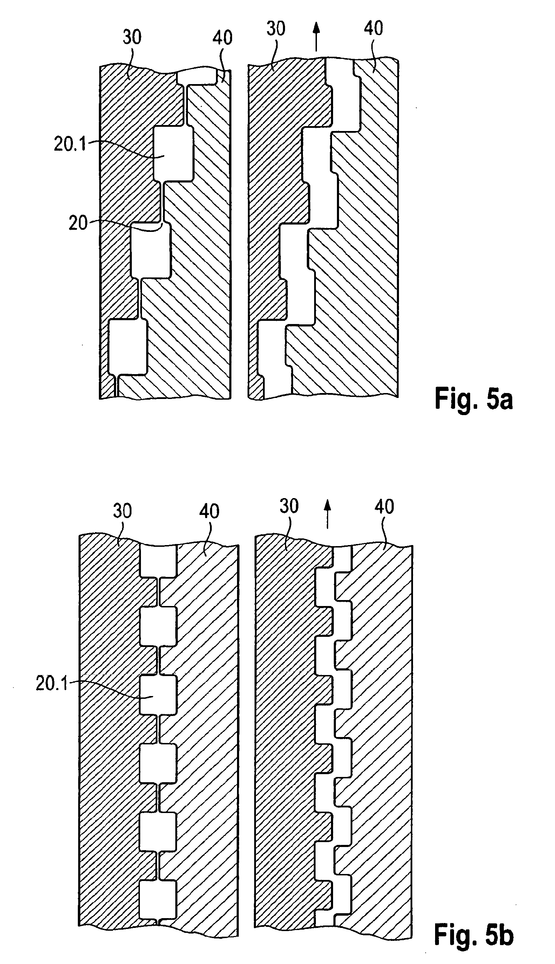

Aus den Figuren 5a und 5b erkennt man den genauen Aufbau einer erfindungsgemäßen Labyrinthdichtung, gebildet aus einem feststehenden Bauteil 30 einer hydraulischen Maschine sowie einem umlaufenden Bauteil 40 der Maschine. In die beiden Bauteile 30 und 40 sind Aussparungen eingearbeitet. Die Begrenzungsflächen bilden ringförmige Kammern 20.1 sowie diese leitend miteinander verbindende ringspaltförmige Kanäle 20.2.

Die beiden Darstellungen 5a und 5b zeigen einen sehr engen Spalt. Im rechten Teil einer jeden der Figuren 5a und 5b ist der Spalt deutlich weiter. Die Änderung kommt durch eine Axialverschiebung der beiden Bauteile 30 und 40 zustande.

Bei Abschaltung des Arbeitsmediums ist die Spaltweite größer. Die hindurchströmende Luft sorgt zum einen dafür, dass Ventilationsverluste vermieden werden, zum anderen wird die Labyrinthdichtung in diesem Falle ausschließlich durch die auf diese Weise bewegte Luft gekühlt.

### Bezugszeichenliste

| | |
|---|---|
| 1 | Turbine |
| 1.1 | Turbinenlaufrad |
| 1.2 | Turbinenspiralgehäuse |
| 1.2.1 | Leitschaufel |
| 1.2.2 | Traversenring |
| 1.2.3 | Absperrorgan |
| 1.2.4 | Turbinendeckeldruckseite |
| 1.2.5 | Turbinendeckelsaugseite |
| 1.3 | Druckleitung |
| 1.4 | Saugleitung |
| 1.5 | Turbinensaugrohr |
| 1.6 | Absperrorgan |
| 2 | Pumpe |
| 2.1 | Pumpenlaufrad |
| 2.2 | Pumpenspiratgehäuse |
| 2.2.1 | Leitschaufel |
| 2.2.2 | Traversenring |
| 2.2.3 | Absperrorgan |
| 2.2.4 | Pumpendeckelsaugseite |
| 2.2.5 | Pumpendeckeldruckseite |
| 2.3 | Druckleitung |
| 2.4 | Saugleitung |
| 2.5 | Pumpensaugrohr |
| 2.6 | Absperrorgan |
| 3 | Welle |
| 4 | elektrische Maschine |
| 6 | Druckleitung |
| 6.1 | Absperrorgan |
| 7 | Drehachse |
| 8 | Saugleitung |
| 9 | Lager |
| 10.1 | Stützelement |
| 10.2 | Stützelement |
| 10.3 | Stützelement |
| 20 | Labyrinthdichtung |
| 20.1 | Kammern |
| 20.2 | ringspaltförmiger Kanal |
| 30 | feststehendes Bauteil |
| 40 | umlaufendes Bauteil |

## Patentansprüche

1. Pumpturbinenanlage, umfassend
1.1 eine Turbine (1) mit einem Turbinenlaufrad (1.1), das von einer Welle (3) getragen ist sowie einem Turbinenspiralgehäuse (1.2);
1.2 eine Pumpe (2) mit einem Pumpenlaufrad (2.1) sowie ein Pumpenspiralgehäuse (2.2);
1.3 eine elektrische Maschine (4), die in einer Triebverbindung mit der Welle (3) steht oder in eine solche bringbar ist;
1.4 zwischen Turbine (1) und Pumpe (2) ist ein hydraulischer Kurzschluss herstellbar;
1.5 aus dem Laufrad (1.1; 2.1) und dem Gehäuse (1.2; 2.2) einer jeden der hydraulischen Maschinen (1; 2) ist je eine Labyrinthdichtung (20) gebildet, durch die beim Betrieb ein Leckagestrom zum Kühlen und/oder Schmieren der Labyrinthdichtung (20) strömt;
1.6 Laufrad (1.1; 2.1) und Gehäuse (1.2; 2.2) der betreffenden hydraulischen Maschine - Turbine (1) oder Pumpe (2) - sind relativ zueinander zwischen einer Betriebsstellung und einer Nicht-Betriebsstellung in Richtung eines Leckagestromes verschiebbar gelagert;
**gekennzeichnet durch** die folgenden Merkmale:
1.7 die Turbine (1) weist eine höhere Nennleistung (N_{T}) auf, als die Pumpe (2);
1.8 die Labyrinthdichtung (20) umfasst eine Mehrzahl von ringförmigen Kammern (20.1) sowie diese leitend miteinander verbindende ringspaltförmige Kanäle (20.2);
1.9 wenigstens eine der beiden Maschinen - Turbine (1) oder Pumpe (2)-weist einen regelbaren Leitapparat auf;
1.10 die Nennleistung N_{T} der Turbine bis zum 5-fachen größer, als die Nennleistung N_{P} der Pumpe.

2. Pumpturbinenanlage nach Anspruch 1, **gekennzeichnet, durch** die folgenden Merkmale:
2.1 die beiden Spiralgehäuse (1.2, 2.2) sind gegenläufig zueinander angeordnet;
2.2 die Druckleitungen (1.3, 2.3) der beiden Spiralgehäuse (1.2, 2.2) münden in einer gemeinsamen Druckleitung (6).

3. Pumpturbinenanlage nach Anspruch 1 oder 2, **dadurch gekennzeichnet, dass** sich die elektrische Maschine (4) in einem Zwischenraum (5) zwischen den beiden Spiralgehäuse (1.2, 2.2) befindet.

4. Pumpturbinenanlage gemäß Anspruch 1, **dadurch gekennzeichnet, dass** sich die elektrische Maschine (4) außerhalb eines Zwischenraums (5) zwischen den beiden Spiralgehäusen (1.2, 2.2) befindet.

5. Pumpturbinenanlage gemäß einem der Ansprüche 2 bis 4, **dadurch gekennzeichnet, dass** die beiden Spiralgehäuse (1.2, 2.2) mittels eines Stützelementes, insbesondere einem zylindrischen Stützringe oder Stützkonus, direkt abgestützt sind.

6. Pumpturbinenanlage nach einem der Ansprüche 2 bis 5, **dadurch gekennzeichnet, dass** in der Druckleitung (6) ein gemeinsames Absperrorgan (6.1) angeordnet ist.

7. Pumpturbinenanlage gemäß einem der Ansprüche 3 bis 6, **dadurch gekennzeichnet, dass** die Druckleitungen (1.3, 2.3) der beiden Spiralgehäuse in eine einzige, gemeinsame Druckleitung münden.

8. Pumpturbinenanlage nach einem der Ansprüche 1 bis 7, **gekennzeichnet durch** die folgenden Merkmale:
8.1 zwischen stationären Bauteilen (30) und umlaufenden Bauteilen (40) sind Labyrinthdichtungen (20) aus beiden Bauteilen gebildet, **durch** die beim Betrieb ein Leckagestrom zum Kühlen und/oder Schmieren der Labyrinthdichtung (20) hindurchströmt;
8.2 die Labyrinthdichtung (20) umfasst eine Mehrzahl von ringförmigen Kammern (20.1) sowie aus diesen leitend miteinander verbindenden ringspaltförmigen Kanälen (20.2);
8.3 das stationäre Bauteil (30) ist zur Einstellung der Spaltweite des Kanals (20.2) in Axialrichtung relativ zum umlaufenden Bauteil (40) zwischen einer Betriebsstellung und einer Nicht-Betriebsstellung in Richtung eines Leckagestromes verschiebbar gelagert.

9. Pumpturbinenanlage nach Anspruch 8, **dadurch gekennzeichnet, dass** die axiale Erstreckung der Kammern (20.1) in Verschieberichtung des stationären Bauteiles (30) größer ist, als die axiale Erstreckung des ringspaltförmigen Kanales (20.2)

10. Pumpturbinenanlage nach Anspruch 9, **dadurch gekennzeichnet, dass** die axiale Ersteckung der Kammern (21) in der relativen Verschieberichtung größer ist als die axiale Erstreckung der ringspaltförmigen Kanäle (22).

11. Pumpturbinenanlage nach einem der Ansprüche 8 bis 10, **dadurch gekennzeichnet, dass** einander zugewandte, die Labyrinthdichtung bildende Begrenzungsflächen (1.1, 2.1) auf einer Zylinder- oder Kegelmantelfläche liegen und beide Bauteile (30, 40) zueinander konzentrisch angeordnet sind.

12. Pumpturbinenanlage nach einem der Ansprüche 1 bis 10, **dadurch gekennzeichnet, dass** dem Turbinenlaufrad (1.1) und/oder dem Pumpenlaufrad (2.1) ein Absperrorgan vor- oder nachgeschaltet ist.

13. Pumpturbinenanlage nach einem der Ansprüche 1 bis 11, **dadurch gekennzeichnet, dass** dem Turbinensaugrohr (1.5) und/oder dem Pumpensaugrohr (2.5) ein Absperrorgan zugeordnet ist.

## Claims

1. Pump turbine system, comprising
1.1 a turbine (1) with a turbine impeller (1.1) and a turbine spiral housing (1.2);
1.2 a pump (2) with a pump impeller (2.1) and a pump spiral housing (2.2);
1.3 an electrical machine (4), which is in drive communication with the shaft (3) or can be brought into such communication;
1.4 a hydraulic short-circuit can be established between turbine (1) and pump (2);
**characterized by** the following features:
1.5 the turbine (1) has a higher rated power (N_{T}) than the pump (2);
1.6 respectively one labyrinth seal (20) is formed from the impeller (1.1; 1.2) and the housing (1.2; 2.2) of each of the hydraulic machines (1; 2), through which a leakage flow for cooling and/or lubricating the labyrinth seal (20) flows during operation;
1.7 the labyrinth seal (20) comprises a plurality of annular chambers (21) and annular gap-shaped channels (22) interconnecting these in a conducting manner;
1.8 impeller (1.1; 2.1) and housing (1.2; 2.2) of the relevant hydraulic machine are mounted displaceably relative to one another between an operating position and a non-operating position in the direction of a leakage flow;
1.9 at least one of the two machines - turbine (1) or pump (2) - has a controllable guide apparatus;
1.10 the rated power N_{T} of the turbine is up to five times higher than the rated power N_{P} of the pump.

2. The pump turbine system according to claim 1, **characterized by** the following features:
2.1 the two spiral housings (1.2, 2.2) are disposed in the opposite direction to one another;
2.2 the pressure lines (1.3, 2.3) of the two spiral housings (1.2, 2.2) open into a common pressure line (6).

3. The pump turbine system according to claim 1 or 2, **characterized in that** the electrical machine (4) is located in an intermediate space (5) between the two spiral housings (1.2, 2.2).

4. The pump turbine system according to claim 1, **characterized in that** the electrical machine (4) is located outside an intermediate space (5) between the two spiral housings (1.2, 2.2).

5. The pump turbine system according to one of claims 2 to 4, **characterized in that** the two spiral housings (1.2, 2.2) are directly supported by means of a support element, in particular a cylindrical supporting ring or supporting cone.

6. The pump turbine system according to one of claims 2 to 5, **characterized in that** a common shut-off member (6.1) is located in the pressure line (6).

7. The pump turbine system according to one of claims 3 to 6, **characterized in that** the pressure lines (1.3, 2.3) of the two spiral housings open into a single common pressure line.

8. The pump turbine system according to one of claims 1 to 7, **characterized by** the following features:
8.1 between stationary components (30) and revolving components (40), labyrinth seals (20) are formed from both components, through which a leakage flow for cooling and/or lubricating the labyrinth seal (20) flows during operation;
8.2 labyrinth seal (20) comprises a plurality of annular chambers (20.1) and annular gap-shaped channels (20.2) interconnecting these in a conducting manner;
8.3 the stationary component (30) is mounted displaceably between an operating position and a non-operating position in the direction of a leakage flow for adjustment of the gap width of the channel (20.2) in the axial direction relative to the revolving component (40).

9. The pump turbine system according to claim 8, **characterized in that** the axial extension of the chambers (20.1) in the direction of displacement of the stationary component (30) is greater than the axial extension of the annular gap-shaped channel (20.2).

10. The pump turbine system according to claim 1, **characterized in that** the axial extension of the chambers (21) in the relative direction of displacement is greater than the axial extension of the annular gap-shaped channels (20.2).

11. The pump turbine system according to one of claims 8 to 10, **characterized in that** mutually facing boundary surfaces (1.1, 2.1) forming the labyrinth seal lie on a cylinder or cone lateral surface and both components (30, 40) are disposed concentrically to one another.

12. The pump turbine system according to one of claims 1 to 10, **characterized in that** a shut-off member is located upstream or downstream of the turbine impeller (1.1) and/or the pump impeller (2.1).

13. The pump turbine system according to one of claims 1 to 11, **characterized in that** a shut-off member is assigned to the turbine suction pipe (1.5) and/or to the pump suction pipe (2.5).

## Revendications

1. Ensemble pompe-turbine, comprenant
1.1 une turbine (1.1) pourvue d'un rotor de turbine (1.1), lequel est porté par un arbre (3), de même que d'un carter de turbine en volute (1.2);
1.2 une pompe (2) pourvue d'un rotor de pompe (2.1) de même que d'un carter de pompe en volute (2.2);
1.3 une machine électrique (4), qui est en liaison motrice avec l'arbre (3) ou peut assurer une telle liaison;
1.4 un court-circuit hydraulique peut être créé entre la turbine (1) et la pompe (2);
1.5 le rotor (1.1; 2.1) et le carter (1.2; 2.2) de chacune des machines hydrauliques (1; 2) constituent respectivement un joint labyrinthe (20), à travers lequel passe pendant l'exploitation un courant de fuite permettant de refroidir et/ou de lubrifier le joint labyrinthe (20);
1.6 le rotor (1.1; 2.1) et le carter (1.2; 2.2) des machines hydrauliques correspondantes - turbine (1) ou pompe (2) - sont montés mobiles en translation l'un par rapport à l'autre entre une position de travail et une position de repos dans le sens du courant de fuite;
présentant les caractéristiques suivantes:
1.7 la turbine (1) présente une puissance nominale (N_{T}) supérieure à celle de la pompe (2);
1.8 le joint labyrinthe (20) comprend une pluralité de chambres annulaires (20.1) de même que des canaux (20.2) en forme d'espace annulaire reliant ces derniers de manière conductrice
1.9 au moins l'une des deux machines - turbine (1) ou pompe (2) - présente un distributeur réglable;
1.10 la puissance nominale N_{T} de la turbine étant jusqu'à 5 fois supérieure à la puissance nominale N_{P} de la pompe.

2. Ensemble pompe-turbine selon la revendication 1, présentant les caractéristiques suivantes:
2.1 les deux carters en volute (1.2, 2.2) sont agencés en sens contraire l'un de l'autre;
2.2 les conduites sous pression (1.3, 2.3) des deux carters en volute (1.2, 2.2) débouchent dans une conduite sous pression commune (6),

3. Ensemble pompe-turbine selon la revendication 1 ou 2, **caractérisé en ce que** la machine électrique (4) se trouve dans un espace intermédiaire (5) entre les deux carters en volute (1.2, 2.2)

4. Ensemble pompe-turbine selon la revendication 1, **caractérisé en ce que** la machine électrique (4) se trouve en dehors d'un espace intermédiaire (5) entre les deux carters en volute (1.2, 2.2).

5. Ensemble pompe-turbine selon l'une des revendications 2 à 4, **caractérisé en ce que** les deux carters en volute (1.2, 2.2) sont supportés directement à l'aide d'un élément d'appui, en particulier un bague d'appui ou cône d'appui cylindrique.

6. Ensemble pompe-turbine selon l'une des revendications 2 à 5, **caractérisé en ce qu'**un organe de blocage commun (6.1) est disposé dans la conduite sous pression (6).

7. Ensemble pompe-turbine selon l'une des revendications 3 à 6, **caractérisé en ce que** les conduites sous pression (1.3, 2.3) des deux carters en volute débouchent dans une seule conduite sous pression commune.

8. Ensemble pompe-turbine selon l'une des revendications 1 à 7, présentant les caractéristiques suivantes:
8.1 des joints labyrinthes (20) sont constitués de deux composants entre des composants stationnaires (30) et des composants rotatifs (40), à travers lequel s'écoule pendant l'exploitation un courant de fuite permettant de refroidir et/ou de lubrifier le joint labyrinthe (20);
8.2 le joint labyrinthe (20) comprend une pluralité de chambres annulaires (20.1) de même que des canaux (20.2) en forme d'espace annulaire reliant ces derniers de manière conductrice;
8.3 le composant stationnaire (30) est monté mobile en translation dans le sens d'un courant de fuite, entre une position de travail et une position de repos, dans la direction axiale par rapport au composant rotatif (40), pour régler la largeur de fente du canal (20.2).

9. Ensemble pompe-turbine selon la revendication 8, **caractérisé en ce que** l'allongement axial des chambres (20.1) est supérieur à l'allongement axial du canal en forme d'espace annulaire (20.2) dans la direction de décalage du composant stationnaire (30).

10. Ensemble pompe-turbine selon la revendication 9, **caractérisé en ce que** l'allongement axial des chambres (21) dans la direction de décalage relative est supérieure à l'allongement axial des canaux en forme d'espace annulaire (22).

11. Ensemble pompe-turbine selon l'une des revendications 8 à 10, **caractérisé en ce que** des surfaces de délimitation (1.1, 2.1), tournées l'une vers l'autre, formant le joint labyrinthe, reposent sur une surface latérale cylindrique ou conique et les deux composants (30, 40) sont agencés concentriquement l'un par rapport à l'autre.

12. Ensemble pompe-turbine selon l'une des revendications 1 à 10, **caractérisé en ce qu'**un organe de blocage est connecté en amont ou en aval du rotor de turbine (1.1) et/ou du rotor de pompe (2.1).

13. Ensemble pompe-turbine selon l'une des revendications 1 à 11, **caractérisé en ce qu'**un organe de blocage est associé au tuyau d'aspiration de turbine (1.5) et/ou au tuyau d'aspiration de pompe.
